# EUROPÄISCHE PATENTSCHRIFT

(11) **EP 3 429 830 B1**
(45) Veröffentlichungstag und Bekanntmachung des Hinweises auf die Patenterteilung: **30.03.2022**
(21) Anmeldenummer: 17707329.3
(22) Anmeldetag: 27.02.2017
(51) Int. Cl.: B29C 67/00, B33Y 40/00, B22F 3/105

(54) **ANLAGE ZUR ADDITIVEN HERSTELLUNG DREIDIMENSIONALER OBJEKTE**
SYSTEM FOR THE ADDITIVE PRODUCTION OF THREE-DIMENSIONAL OBJECTS
SYSTÈME POUR LA PRODUCTION ADDITIVE D'OBJETS TRIDIMENSIONNELS

(30) Priorität: 14.03.2016 DE 102016104677
(43) Veröffentlichungstag der Anmeldung: 23.01.2019
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/EP2017/054497
(87) Internationale Veröffentlichungsnummer: WO 2017/157647

(56) Entgegenhaltungen:
- EP-A2- 1 769 903
- WO-A1-2017/050860
- DE-A1-102014 007 408
- DE-A1-102014 212 176
- US-A- 5 386 500

## Beschreibung

Die Erfindung betrifft eine Anlage zur additiven Herstellung dreidimensionaler Objekte.

Derartige Anlagen zur additiven bzw. generativen Herstellung dreidimensionaler Objekte sind an und für sich bekannt. Entsprechende Anlagen umfassen u.a. Vorrichtungen zur additiven Herstellung dreidimensionaler Objekte. Vermittels entsprechenden Vorrichtungen werden herzustellende dreidimensionale Objekte additiv hergestellt.

In entsprechenden Anlagen ist der Einsatz modulartiger Funktionseinheiten bekannt. Entsprechende Funktionseinheiten, wie z. B. Baumodule, Dosiermodule, Überlaufmodule, weisen typischerweise einen Aufnahmeraum zur Aufnahme von im Rahmen eines additiven Bauvorgangs zu verfestigendem oder im Rahmen eines additiven Bauvorgangs nicht verfestigtem Baumaterial auf. Befüllungs- und/oder Entleerungsvorgänge jeweiliger Aufnahmeräume können mitunter zeitaufwändig sein, da diese nicht ohne Weiteres automatisierbar sind.

Es besteht ein steter Weiterentwicklungsbedarf entsprechender Anlagen im Hinblick auf eine teil- oder vollautomatisierbare additive Herstellung dreidimensionaler Objekte. Dies gilt auch für Befüllungs- und/oder Entleerungsvorgänge jeweiliger funktionseinheitseitiger Aufnahmeräume.

DE 10 2014 212 176 A1 offenbart eine Prozesskammer für eine Vorrichtung zur additiven Herstellung dreidimensionaler Objekte, in welcher ein dreidimensionales Objekt additiv hergestellt werden kann.

EP 1 769 903 A2 offenbart eine Vorrichtung zur additiven Herstellung dreidimensionaler Objekte mit einer Kammer, in welcher ein dreidimensionales Objekt additiv hergestellt werden kann.

Der Erfindung liegt die Aufgabe zugrunde, eine demgegenüber verbesserte Anlage zur additiven Herstellung dreidimensionaler Objekte anzugeben.

Die Aufgabe wird durch eine Anlage zur additiven Herstellung dreidimensionaler Objekte gemäß Anspruch 1 gelöst. Die abhängigen Ansprüche betreffen besondere Ausführungsformen der Anlage.

Die hierin beschriebene Anlage dient im Allgemeinen der additiven bzw. generativen Herstellung dreidimensionaler Objekte d. h. beispielsweise technischer Bauteile bzw. technischer Bauteilgruppen.

Die Anlage umfasst wenigstens eine Vorrichtung zur additiven Herstellung wenigstens eines dreidimensionalen Objekts (im Weiteren abgekürzt als "Objekt" bezeichnet) durch sukzessive schichtweise selektive Belichtung und damit einhergehende Verfestigung einzelner Baumaterialschichten aus einem verfestigbaren Baumaterial vermittels wenigstens eines Energiestrahls. Bei dem verfestigbaren Baumaterial kann es sich um ein Metall-, Kunststoff- und/oder Keramikpulver handeln. Unter einem Metall-, Kunststoff- oder Keramikpulver kann auch ein Pulvergemisch unterschiedlicher Metalle, Kunststoffe oder Keramiken verstanden werden. Für ein Metallpulver gilt insofern, dass es sich hierbei auch um ein Pulver aus wenigstens einer Metalllegierung handeln kann. Bei dem Energiestrahl kann es sich um einen Laserstrahl handeln. Bei der Vorrichtung kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren) handeln. Bei der Anlage kann es sich entsprechend um eine Anlage zur Durchführung selektiver Laserschmelzverfahren (abgekürzt SLM-Verfahren) oder selektiver Lasersinterverfahren (abgekürzt SLS-Verfahren) handeln.

Die sukzessive schichtweise selektive Belichtung und die damit einhergehende sukzessive schichtweise selektive Verfestigung der zur Herstellung eines Objekts jeweils zu verfestigenden Baumaterialschichten erfolgt auf Grundlage von objektbezogenen Baudaten. Die Baudaten beschreiben im Allgemeinen die geometrische bzw. geometrisch-konstruktive Gestalt des herzustellenden Objekts. Bei den Baudaten kann es sich beispielsweise um CAD-Daten des herzustellenden Objekts handeln bzw. können diese solche beinhalten.

Die Vorrichtung umfasst sämtliche zur Durchführung additiver Bauprozesse typischerweise erforderlichen Funktionskomponenten. Zu entsprechenden Funktionskomponenten zählt beispielsweise eine Beschichtereinrichtung zur Ausbildung selektiv zu belichtender Baumaterialschichten in einer Bauebene und eine, z. B. eine oder mehrere als Laserdiodenelemente ausgebildete oder solche umfassende Belichtungselemente umfassende, Belichtungseinrichtung zur Erzeugung eines Energiestrahls zur selektiven Belichtung einer vermittels der Beschichtereinrichtung in einer Bauebene ausgebildeten, selektiv zu belichtenden Baumaterialschicht. Die Funktionskomponenten sind typischerweise in einer, gegebenenfalls auch als Maschinengehäuse zu bezeichnenden bzw. zu erachtenden, typischerweise inertisierbaren, Gehäusestruktur der Vorrichtung angeordnet.

Die Anlage umfasst weiterhin wenigstens eine modulartige Funktionseinheit ("Funktionseinheit"). Der modulartige Aufbau einer Funktionseinheit ergibt sich aus einer als "Modul" zu bezeichnenden Gehäusestruktur, in welcher die jeweiligen funktionellen Bestandteile der jeweiligen Funktionseinheit aufgenommen sind. Die Gehäusestruktur bestimmt die äußere geometrische Gestalt der Funktionseinheit. Im Weiteren wird eine beispielhafte Aufzählung entsprechender Funktionseinheiten gegeben:
Eine Funktionseinheit kann als ein Baumodul ausgebildet sein. Ein Baumodul umfasst wenigstens eine in einem, typischerweise kammerartigen, Aufnahmeraum ("Baukammer") bewegbar, insbesondere höhenverstellbar, relativ zu einem Grundkörper des Baumoduls gelagerte Bau- oder Trägerplatte, auf welcher ein additiver Aufbau wenigstens eines dreidimensionalen Objekts erfolgen kann. Ein Baumodul dient im Rahmen der additiven Herstellung dreidimensionaler Objekte insbesondere der Lagerung eines herzustellenden Objekts während der Durchführung eines additiven Bauvorgangs.

Eine Funktionseinheit kann auch als ein Dosiermodul ausgebildet sein. Ein Dosiermodul umfasst wenigstens einen zur Aufnahme von im Rahmen einer additiven Herstellung eines dreidimensionalen Objekts zu verfestigendem Baumaterial eingerichteten, typischerweise kammerartigen, Aufnahmeraum und gegebenenfalls eine Dosiereinrichtung zur Dosierung einer bestimmten Menge von im Rahmen einer additiven Herstellung eines Objekts zu verfestigendem Baumaterial aus dem Aufnahmeraum. Ein Dosiermodul dient im Rahmen der additiven Herstellung dreidimensionaler Objekte insbesondere der Bereitstellung (Dosierung) einer bestimmten Menge an zu verfestigendem Baumaterial, welches vermittels einer Beschichtereinrichtung unter Ausbildung einer definierten Baumaterialschicht gleichmäßig in einer Bauebene verteilt wird.

Eine Funktionseinheit kann jedoch auch als ein Überlaufmodul ausgebildet sein. Ein Überlaufmodul umfasst wenigstens einen zur Aufnahme von im Rahmen einer additiven Herstellung eines dreidimensionalen Objekts nicht verfestigtem Baumaterial eingerichteten, typischerweise kammerartigen, Aufnahmeraum. Das Überlaufmodul dient im Rahmen der additiven Herstellung dreidimensionaler Objekte insbesondere dazu, nicht verfestigtes aus einer Bau- oder Prozesskammer der Vorrichtung zur additiven Herstellung zu entfernendes bzw. entferntes Baumaterial aufzunehmen.

Eine Funktionseinheit kann auch als ein Handhabungs- oder Handlingsmodul ausgebildet sein. Ein Handhabungs- oder Handlingsmodul umfasst wenigstens einen zur Aufnahme wenigstens eines additiv hergestellten Objekts eingerichteten, typischerweise kammerartigen, Aufnahmeraum. Über eine geeignete Schnittstelle kann eine Zugangs- oder Zugriffsmöglichkeit in den Aufnahmeraum zum "Auspacken" des Objekts erfolgen. Der Zugang bzw. Zugriff kann über einen Bediener ("Glovebox") oder über einen Roboter erfolgen.

Unabhängig von ihrer konkreten funktionellen Ausgestaltung ist eine jeweilige Funktionseinheit bewegbar; wie sich im Weiteren ergibt, kann eine jeweilige Funktionseinheit sonach zwischen verschiedenen stationären, d. h. nicht bewegbaren, typischerweise fest mit einem Untergrund verbundenen Bestandteilen der Anlage (hin und her) bewegt werden.

Die Anlage umfasst weiterhin wenigstens eine Befüllungs- und Entleerungseinrichtung oder eine oder eine Befüllungseinrichtung, welche zur Befüllung eines Aufnahmeraums einer in einen Befüllungsbereich der Befüllungseinrichtung bewegten Funktionseinheit mit Baumaterial eingerichtet ist. Die Befüllungs- und Entleerungseinrichtung ist zur Befüllung eines Aufnahmeraums einer in einen Befüllungsbereich der Befüllungs- und Entleerungseinrichtung bewegten Funktionseinheit mit Baumaterial und zur Entleerung von in einem Aufnahmeraum einer in einen Entleerungsbereich der Befüllungs- und/oder Entleerungseinrichtung bewegten Funktionseinheit befindlichem Baumaterial eingerichtet und weist hierfür entsprechend einen Befüllungsbereich und einen Entleergungsbereich auf. Gegebenenfalls kann ein kombinierter Befüllungs- und Entleerungsbereich, d. h. ein Bereich, in welchem sowohl eine Befüllung mit Baumaterial als auch eine Entleerung von Baumaterial möglich ist, vorhanden sein. Die Befüllungs- und/oder Entleerungseinrichtung kann zumindest im Hinblick auf entsprechende Befüllvorgänge als "Tankstation" bezeichnet werden. Sämtliche Ausführungen im Zusammenhang mit der Befüllungs- und Entleerungseinrichtung gelten analog für eine entsprechende Befüllungseinrichtung.

In dem Befüllungsbereich ist ein Befüllen eines Aufnahmeraums einer in den Befüllungsbereich bewegten Funktionseinheit mit Baumaterial möglich. Der Befüllungsbereich umfasst wenigstens eine geeignete Befüllungseinrichtung ausgebildet. Die Befüllungseinrichtung kann wenigstens eine Fördereinrichtung zur Förderung von in einen jeweiligen Aufnahmeraum einzufüllendem Baumaterial umfassen. Eine Fördereinrichtung kann z. B. als Strömungserzeugungseinrichtung ausgebildet sein, welche zur Erzeugung einer Einfüll(gebläse)strömung zum Einfüllen von Baumaterial in einen jeweiligen Aufnahmeraum eingerichtet ist. Eine Strömungserzeugungseinrichtung kann z. B. als Gebläseeinrichtung ausgebildet sein oder eine solche umfassen.

In einem Entleerungsbereich ist ein Entleeren von in einem Aufnahmeraum einer in den Entleerungsbereich bewegten Funktionseinheit möglich. Der Entleerungsbereich umfasst wenigstens eine geeignete Entleerungseinrichtung. Die Entleerungseinrichtung kann wenigstens eine Fördereinrichtung zur Förderung von aus einem jeweiligen Aufnahmeraum zu entleerendem Baumaterial umfassen. Hierzu kann die Entleerungseinrichtung als eine Strömungserzeugungseinrichtung ausgebildet sein, welche zur Erzeugung einer Entleerungs(saug)strömung zum Entleeren von Baumaterial aus einem jeweiligen Aufnahmeraum eingerichtet ist. Eine Strömungserzeugungseinrichtung kann z. B. als Pumpeneinrichtung ausgebildet sein oder eine solche umfassen.

Selbstverständlich kann die Befüllungs- und Entleerungseinrichtung mehrere (chemisch) unterschiedliche Baumaterialien bevorraten, sodass eine individuelle Befüllung unterschiedlicher Funktionseinheiten mit unterschiedlichen Baumaterialien möglich ist. Eine erste in den Befüllungsbereich bewegte Funktionseinheit kann z. B. mit einem Stahlpulver befüllt werden, eine zweite in den oder einen weiteren Befüllungsbereich bewegte Funktionseinheit kann z. B. mit einem Aluminiumpulver befüllt werden. In analoger Weise ist eine individuelle Entleerung unterschiedlicher Funktionseinheiten möglich; mithin können (chemisch) unterschiedliche Baumaterialien aus unterschiedlichen Funktionseinheiten entleert und getrennt voneinander bevorratet, weiterverarbeitet, etc. werden.

Die Befüllungs- und Entleerungseinrichtung ist zweckmäßig in einer inertisierbaren Gehäusestruktur angeordnet oder ausgebildet. Die der Befüllungs- und Entleerungseinrichtung zugehörige Gehäusestruktur kann also inertisierbar sein, d. h. in dieser kann eine inerte Atmosphäre ausgebildet und aufrechterhalten werden. In analoger Weise kann in der Gehäusestruktur ein bestimmtes Druckniveau, d. h. z. B. ein Über- oder Unterdruck, ausgebildet und aufrechterhalten werden.

Die Anlage umfasst weiterhin eine Tunnelstruktur. Die Tunnelstruktur weist wenigstens einen Tunnelabschnitt auf, in welchem bzw. durch welchen wenigstens eine Funktionseinheit bewegbar ist. In einem jeweiligen Tunnelabschnitt ist wenigstens eine Bewegungsbahn oder - spur (im Weiteren "Bewegungsbahn"), entlang welcher eine Funktionseinheit durch den Tunnelabschnitt bewegbar ist, ausgebildet oder angeordnet. Selbstverständlich ist es möglich, in einem Tunnelabschnitt zumindest abschnittsweise mehrere Bewegungsbahnen, d. h. z. B. benachbart, insbesondere parallel, angeordnete Bewegungsbahnen in einer oder mehreren Ebenen, auszubilden oder anzuordnen. Eine entsprechende Bewegungsbahn kann eine geführte Bewegung einer Funktionseinheit in dem bzw. durch den jeweiligen Tunnelabschnitt ermöglichen.

Die Funktion der Tunnelstruktur bzw. der dieser zugehörigen Tunnelabschnitte besteht darin, wenigstens zwei unterschiedliche stationäre Bestandteile der Anlage unmittelbar oder mittelbar, d. h. z. B. unter Zwischenschaltung wenigstens eines weiteren Tunnelabschnitts und/oder eines weiteren stationären Bestandteils der Anlage, miteinander zu verbinden. Die Verbindung jeweiliger stationärer Bestandteile der Anlage ermöglicht ein hin und her Bewegen jeweiliger Funktionseinheiten zwischen jeweiligen stationären Bestandteilen der Anlage. Bewegungen jeweiliger Funktionseinheiten durch die Tunnelstruktur sind insbesondere vollautomatisiert möglich. Über einen oder mehrere Tunnelabschnitte kann z. B. eine der Anlage zugehörige stationäre Vorrichtung zur additiven Herstellung dreidimensionaler Objekte ("Baustation") mit einer der Anlage zugehörigen stationären Befüllungs- und Entleerungseinrichtung ("Tankstation") verbunden werden. Beispielhafte Bewegungen von Funktionseinheiten zwischen einer Baustation und einer Tankstation werden weiter unten nochmals gesondert behandelt.

Grundsätzlich ist es möglich, dass die Bewegungsbahn, entlang welcher eine Funktionseinheit ausgehend von einem ersten stationären Bestandteil der Anlage zurück in einen weiteren stationären Bestandteil der Anlage bewegt wird, anders ist als die Bewegungsbahn, entlang welcher die Funktionseinheit ausgehend von dem stationären Bestandteil in den weiteren stationären Bestandteil der Vorrichtung bewegt wurde. Die Auswahl einer Bewegungsbahn einer Funktionseinheit zwischen jeweiligen stationären Bestandteilen der Anlage kann auf Grundlage bestimmter Priorisierungen bestimmter Funktionseinheiten erfolgen. Für höher priorisierte Funktionseinheiten können streckenmäßig kürzere bzw. schnellere Bewegungsbahnen ausgewählt werden als für niedriger priorisierte Funktionseinheiten. Gleichermaßen können höher priorisierte Funktionseinheiten mit einer im Vergleich zu niedriger priorisierten Funktionseinheiten höheren Geschwindigkeit bewegt werden.

Zur Bewegung jeweiliger Funktionseinheiten umfasst die Anlage wenigstens eine Fördereinrichtung. Die Fördereinrichtung kann mit einer (motorischen) Antriebseinrichtung gekoppelt sein, über welche eine wenigstens eine Funktionseinheit in eine Bewegung versetzende Antriebskraft erzeugbar ist.

Die Fördereinrichtung kann wenigstens ein tunnelstrukturseitig angeordnetes oder ausgebildetes Fördermittel umfassen, welches eingerichtet ist, eine Funktionseinheit in eine Bewegung zu versetzen. Bei einem solchen Fördermittel kann es sich z. B. um ein mechanisches Fördermittel, d. h. z. B. um einen Band-, Ketten- oder Rollenförderer, handeln, welches durch seine räumliche Erstreckung innerhalb eines jeweiligen Tunnelabschnitts eine Förderstrecke und somit eine Bewegungsbahn definiert, entlang welcher eine Funktionseinheit bewegbar ist. Ein entsprechendes Fördermittel kann z. B. boden- oder wandseitig an einer Wandung eines Tunnelabschnitts angeordnet oder ausgebildet sein.

Die oder eine Fördereinrichtung kann wenigstens ein funktionseinheitseitig angeordnetes oder ausgebildetes Fördermittel umfassen, welches eingerichtet ist, die mit diesem ausgestattete Funktionseinheit in eine Bewegung zu versetzen. Bei einem solchen Fördermittel kann es sich z. B. um eine in eine jeweilige Funktionseinheit integrierte (elektro)motorische Antriebseinrichtung handeln. Derart kann die Bewegungsfreiheit einer Funktionseinheit erweitert werden, da z. B. Rotationsbewegungen um eine vertikale Achse möglich sind.

Die Steuerung sämtlicher Bewegungen der in der Anlage, insbesondere in der Tunnelstruktur, bewegten Funktionseinheiten erfolgt über eine zentrale Steuerungseinrichtung, welche zweckmäßig unmittelbar oder mittelbar mit jeweiligen Funktionseinheiten, welche hierfür mit geeigneten, Kommunikationseinrichtungen ausgestattet sein können, z. B. funkbasiert, kommuniziert. In der Steuerungseinrichtung liegen zweckmäßig sämtliche für die Bewegung jeweiliger Funktionseinheiten innerhalb der Anlage bzw. der Tunnelstruktur relevanten Informationen, d. h. insbesondere jeweilige Bewegungsinformation, d. h. z. B. Geschwindigkeitsinformation, jeweilige Positionsinformation, d. h. z. B. Start- und Zielinformationen, jeweilige Priorisierungsinformationen, etc. vor. Die Steuerung der Bewegungen der in der Anlage bzw. in der Tunnelstruktur bewegten Funktionseinheiten kann vollautomatisch erfolgen.

Ein jeweiliger Tunnelabschnitt begrenzt wenigstens einen Hohlraum, in welchem wenigstens eine Funktionseinheit bewegbar ist. Im Übrigen ist die geometrisch-konstruktive Ausgestaltung eines jeweiligen Tunnelabschnitts mit der Maßgabe, dass wenigstens eine Funktionseinheit in diesem bzw. durch diesen bewegbar ist, beliebig wählbar. Ein jeweiliger Tunnelabschnitt kann z. B. eine runde, rundliche oder eckige Querschnittsfläche aufweisen. Im Hinblick auf seine Längserstreckung kann ein jeweiliger Tunnelabschnitt zumindest abschnittsweise, insbesondere vollständig, geradlinig oder zumindest abschnittsweise, insbesondere vollständig, gebogen oder gekrümmt verlaufend ausgebildet sein. Selbstverständlich kann ein jeweiliger Tunnelabschnitt aus mehreren Tunnelabschnittsegmenten, welche unter Ausbildung des jeweiligen Tunnelabschnitts miteinander verbindbar oder verbunden sind, gebildet sein.

Ein jeweiliger Tunnelabschnitt kann in wenigstens einen weiteren, z. B. winklig zu diesem verlaufenden, Tunnelabschnitt münden. Die Tunnelstruktur kann - ähnlich einem aus dem Bahnverkehr bekannten Gleis- oder Schienensystem -mehrere an definierten Positionen ineinander mündende Tunnelabschnitte umfassen. Mehrere Tunnelabschnitte können zumindest abschnittsweise neben-, über- oder untereinander verlaufen. Die Tunnelstruktur kann sonach mehrere zumindest abschnittsweise neben-, über- oder untereinander, mithin in unterschiedlichen (horizontalen und/oder vertikalen) Ebenen verlaufende Tunnelabschnitte umfassen.

Ein jeweiliger Tunnelabschnitt kann inertisierbar sein, d. h. in diesem kann eine inerte Atmosphäre ausgebildet und aufrechterhalten werden. In analoger Weise kann in einem jeweiligen Tunnelabschnitt ein bestimmtes Druckniveau, d. h. z. B. ein Über- oder Unterdruck, ausgebildet und aufrechterhalten werden.

Um mit der Tunnelstruktur verbunden werden zu können, können einzelne, mehrere oder sämtliche stationäre Bestandteile der Anlage einen Verbindungsabschnitt aufweisen, über welchen diese mit der Tunnelstruktur verbindbar oder verbunden sind.

Konkret weist die Vorrichtung wenigstens einen Verbindungsabschnitt auf, über welchen die Vorrichtung mit der Tunnelstruktur verbindbar oder verbunden ist. Mithin sind Funktionseinheiten ausgehend von der Vorrichtung in die Tunnelstruktur oder ausgehend von der Tunnelstruktur in die Vorrichtung bewegbar.

Analog der Vorrichtung weist auch die Befüllungs- und Entleerungseinrichtung wenigstens einen Verbindungsabschnitt auf, über welchen die Befüllungs- und Entleerungseinrichtung mit der Tunnelstruktur verbindbar oder verbunden ist. Mithin sind Funktionseinheiten ausgehend von der Befüllungs- und Entleerungseinrichtung bzw. einer Befüllungseinrichtung in die Tunnelstruktur oder ausgehend von der Tunnelstruktur in die Befüllungs- und Entleerungseinrichtung bzw. in die Befüllungseinrichtung bewegbar. Funktionseinheiten können sonach über die Tunnelstruktur zwischen der Vorrichtung und der Befüllungs- und Entleerungseinrichtung bzw. einer Befüllungseinrichtung hin und her bewegt werden.

Es ist auch möglich, dass in jeweiligen stationären Bestandteilen der Anlage, insbesondere in der Vorrichtung bzw. in der Befüllungs- und Entleerungseinrichtung, wenigstens ein Tunnelabschnitt der Tunnelstruktur angeordnet oder ausgebildet ist, welcher über den jeweiligen Verbindungsabschnitt mit wenigstens einem außerhalb des jeweiligen stationären Bestandteils der Anlage, insbesondere der Vorrichtung bzw. der Befüllungs- und Entleerungseinrichtung, angeordneten oder ausgebildeten Tunnelabschnitt kommuniziert.

Konkret können z. B. "leere" Dosiermodule ausgehend von der Vorrichtung, d. h. z. B. ausgehend von einem innerhalb der Vorrichtung befindlichen Tunnelabschnitt, über die Tunnelstruktur in die Befüllungs- und Entleerungseinrichtung, d. h. z. B. in einen innerhalb der Befüllungs- und Entleerungseinrichtung befindlichen Tunnelabschnitt, bewegt, dort befüllt und über die Tunnelstruktur zurück in die Vorrichtung bewegt werden. Analog dazu können "volle" Überlaufmodule ausgehend von der Vorrichtung über die Tunnelstruktur in die Befüllungs- und Entleerungseinrichtung bewegt, dort entleert und über die Tunnelstruktur zurück in die Vorrichtung bewegt werden.

Insgesamt liegt eine, insbesondere im Hinblick auf eine Automatisierbarkeit der additiven Herstellung dreidimensionaler Objekte, verbesserte Anlage zur additiven Herstellung dreidimensionaler Objekte vor. Insbesondere sind Befüllungs- und Entleerungsvorgänge jeweiliger Funktionseinheiten automatisierbar. Die Vorteilhaftigkeit der Anlage ergibt sich besonders im Hinblick auf eine automatisierbare additive Serienfertigung dreidimensionaler Objekte.

Der Befüllungs- und Entleerungseinrichtung kann eine Erfassungseinrichtung zugeordnet sein. Die Erfassungseinrichtung umfasst typischerweise wenigstens ein hard- und/oder softwaremäßig implementiertes Erfassungselement. Über die Erfassungseinrichtung lassen sich unterschiedliche Erfassungsparameter erfassen, was die Funktionalität und Praktikabilität der Befüllungs- und Entleerungseinrichtung erhöht. Sämtliche von der Erfassungseinrichtung erfassten Erfassungsparameter können über ein, gegebenenfalls drahtloses, Daten- bzw. Kommunikationsnetzwerk an wenigstens einen Kommunikationspartner, d. h. z. B. eine zentrale Steuerungseinrichtung der Anlage, übertragen werden.

Die Erfassungseinrichtung kann zur Erfassung einer in einen Befüllungsbereich und/oder in einen Entleerungsbereich der Befüllungs- und Entleerungseinrichtung bewegten Funktionseinheit eingerichtet sein. Über eine entsprechend eingerichtete Erfassungseinrichtung ist sonach erfassbar, ob eine Funktionseinheit in den Befüllungs- bzw. Entleerungsbereich der Befüllungs- und Entleerungseinrichtung bewegt ist. In dem Fall einer Erfassung einer in den Befüllungs- bzw. Entleerungsbereich bewegten Funktionseinheit kann weiterhin erfassbar sein, um welche Art von Funktionseinheit es sich konkret handelt. Die Erfassung einer in den Befüllungs- bzw. Entleerungsbereich der Befüllungs- und Entleerungseinrichtung bewegten Funktionseinheit respektive deren Art kann z. B. optisch, d. h. z. B. vermittels eines optischen Scanvorgangs, oder mechanisch, d. h. z. B. vermittels einer Erfassung des auf eine in einem Befüllungs- und Entleerungsbereich angeordnete oder ausgebildete Gewichtssensorik wirkenden Gewichts der Funktionseinheit, erfolgen.

Die Erfassungseinrichtung kann (auch) zur Erfassung wenigstens eines Zustandsparameters, insbesondere der Funktionsfähigkeit, wenigstens eines Funktionselements einer in den Befüllungs- bzw. Entleerungsbereich der Befüllungs- und Entleerungseinrichtung bewegten Funktionseinheit eingerichtet sein. Über eine entsprechend eingerichtete Erfassungseinrichtung sind sonach bestimmte Zustandsparameter, d. h. insbesondere die Funktionsfähigkeit, bestimmter Funktionselemente einer Funktionseinheit erfassbar. Für das Beispiel eines Baumoduls ist z. B. erfassbar, ob die ordnungsgemäße Funktionsfähigkeit der bewegbar gelagerten Bauplatte gegeben ist. Hierfür kann die Erfassungseinrichtung z. B. geeignete Steuerinformationen an einen mit der bewegbar gelagerten Bauplatte gekoppelten Antrieb übermitteln und z. B. eine örtliche und/oder zeitlich aufgelöste Erfassung (Überwachung) einer Bewegung der Bauplatte unter den durch die Steuerinformationen bestimmten Antriebsbedingungen durchführen. Die erfasste Bewegung der Bauplatte ermöglicht Rückschlüsse auf die Funktionsfähigkeit der bewegbaren Lagerung der Bauplatte.

Die Erfassungseinrichtung kann (auch) zur Erfassung wenigstens eines, insbesondere physikalischen, Zustandsparameters innerhalb eines, insbesondere zumindest abschnittsweise mit Baumaterial befüllten, Aufnahmeraums einer in den Befüllungs- bzw. Entleerungsbereich der Befüllungs- und Entleerungseinrichtung bewegten Funktionseinheit eingerichtet sein. Über eine entsprechend eingerichtete Erfassungseinrichtung sind bestimmte, d. h. insbesondere physikalische, Zustandsparameter, d. h. z. B. Atmosphäre, Druck, Feuchtigkeit, Temperatur, etc., innerhalb funktionseinheitseitiger Aufnahmeräume erfassbar. Für das Beispiel eines Dosier- oder Überlaufmoduls ist z. B. erfassbar, welche(r) Atmosphäre, Druck, Feuchtigkeit, Temperatur, etc. innerhalb des jeweiligen Aufnahmeraums gegeben ist. Die erfassten Zustandsparameter innerhalb eines Aufnahmeraums ermöglichen insbesondere Rückschlüsse auf die Güte bzw. Verarbeitbarkeit bzw. Wiederverwendbarkeit des in der Funktionseinheit befindlichen Baumaterials. Die Erfassung entsprechender Zustandsparameter kann vermittels geeigneter, z. B. messsondenartig ausgebildeter, Erfassungselemente erfolgen, welche entsprechende Zustandsparameter über eine hierfür vorgesehene funktionseinheitseitige Schnittstelle erfassen. Eine funktionseinheitseitige Schnittstelle kann z. B. durch eine Zugangsmöglichkeit an und/oder in einen funktionseinheitseitigen Aufnahmeraum realisiert sein.

Selbstverständlich kann die Erfassungseinrichtung (auch) zur Erfassung eines, insbesondere physikalischen, Zustandsparameters eines Baumaterials, welches in einem Aufnahmeraum einer in den Befüllungs- bzw. Entleerungsbereich der Befüllungs- und Entleerungseinrichtung bewegten Funktionseinheit aufgenommen ist, eingerichtet sein. Über eine entsprechend eingerichtete Erfassungseinrichtung sind allgemein bestimmte, d. h. insbesondere physikalische, Zustandsparameter, d. h. z. B. Dichte, Feuchtigkeit, Temperatur, etc., eines innerhalb eines funktionseinheitseitigen Aufnahmeraums befindlichen Baumaterials erfassbar. Für das Beispiel eines Dosier- oder Überlaufmoduls ist z. B. erfassbar, welche Dichte, Feuchtigkeit, Temperatur, etc. für ein Baumaterial gegeben ist. Die erfassten Zustandsparameter innerhalb eines Aufnahmeraums ermöglichen insbesondere Rückschlüsse auf die Güte bzw. Verarbeitbarkeit bzw. Wiederverwendbarkeit des in der Funktionseinheit befindlichen Baumaterials. Die Erfassung entsprechender Zustandsparameter kann wiederum vermittels geeigneter, z. B. messsondenartig ausgebildeter, Erfassungselemente erfolgen, welche entsprechende Zustandsparameter über eine hierfür vorgesehene funktionseinheitseitige Schnittstelle erfassen. Eine funktionseinheitseitige Schnittstelle kann wiederum z. B. durch eine Zugangsmöglichkeit an und/oder in einen funktionseinheitseitigen Aufnahmeraum realisiert sein.

Schließlich kann die Erfassungseinrichtung z. B. (auch) zur Erfassung eines Füllstands eines Baumaterials in einem Aufnahmeraum einer in den Befüllungs- bzw. Entleerungsbereich der Befüllungs- und Entleerungseinrichtung bewegten Funktionseinheit eingerichtet sein. Über eine entsprechend eingerichtete Erfassungseinrichtung sind sonach Füllstände eines in einem funktionseinheitseitigen Aufnahmeraum befindlichen Baumaterials erfassbar. Für das Beispiel eines Dosier- oder Überlaufmoduls ist sonach erfassbar, welcher Füllstand innerhalb des jeweiligen Aufnahmeraums gegeben ist. Die erfassten Füllstände ermöglichen insbesondere Rückschlüsse auf die Notwendigkeit einer Befüllung oder einer Entleerung des Dosier- oder Überlaufmoduls. Die Erfassung entsprechender Füllstände kann auch hier vermittels geeigneter, z. B. messsondenartig ausgebildeter, Erfassungselemente erfolgen, welche entsprechende Füllstände über eine hierfür vorgesehene funktionseinheitseitige Schnittstelle erfassen. Eine funktionseinheitseitige Schnittstelle kann auch hier z. B. durch eine Zugangsmöglichkeit an und/oder in einen funktionseinheitseitigen Aufnahmeraum realisiert sein.

Angesichts der über eine entsprechend eingerichtete Erfassungseinrichtung erfassbaren Erfassungsparameter kann die Befüllungs- und Entleerungseinrichtung weiterhin bestimmte Einrichtungen umfassen oder zumindest mit solchen verbunden sein, über welche sich in Abhängigkeit des jeweils erfassten Erfassungsparameters bestimmte Maßnahmen treffen lassen, um z. B. Einfluss auf die Güte bzw. Verarbeitbarkeit bzw. Wiederverwendbarkeit von in einen funktionseinheitseitigen Aufnahmeraum einzufüllenden bzw. von aus einem funktionseinheitseitigen Aufnahmeraum zu entleerenden Baumaterial zu nehmen:
Der Befüllungs- und Entleerungseinrichtung kann z. B. eine Temperiereinrichtung zuordenbar oder zugeordnet sein, welche zur Temperierung eines Aufnahmeraums einer in den Befüllungs- bzw. Entleerungsbereich der Befüllungs- und Entleerungseinrichtung bewegten Funktionseinheit und/oder zur Temperierung eines Baumaterials, welches in einem Aufnahmeraum einer in den Befüllungs- bzw. Entleerungsbereich der Befüllungs- und Entleerungseinrichtung bewegten Funktionseinheit aufgenommen ist, eingerichtet ist. Die Temperierung des Aufnahmeraums bzw. des Baumaterials, worunter typischerweise eine Erwärmung zu verstehen ist, kann z. B. über eine (direkte) Temperierung der Funktionseinheit und/oder über eine Steuerung (Aktivierung) funktionseinheitseitig vorgesehener Temperiermittel, d. h. z. B. Heizelemente, erfolgen. Für eine Temperierung der Funktionseinheit kann die Temperiereinrichtung über geeignete Anschlussmittel bzw. Schnittstellen ein entsprechend temperiertes Temperierfluid z. B. in eine funktionseinheitseitige Temperierkanalstruktur einbringen. Für eine Steuerung (Aktivierung) funktionseinheitseitig vorgesehener Temperiermittel kann die Temperiereinrichtung über geeignete Anschlussmittel bzw. Schnittstellen Steuerinformationen, worunter auch eine schlichte elektrische Versorgung zu verstehen ist, an jeweilige funktionseinheitseitig vorgesehene Temperiermittel übermitteln.

Weiterhin kann der Befüllungs- und Entleerungseinrichtung eine Inertisierungseinrichtung zuordenbar oder zugeordnet sein, welche zur Inertisierung wenigstens eines, insbesondere zumindest abschnittsweise mit Baumaterial befüllten, Aufnahmeraums einer in den Befüllungs- bzw. Entleerungsbereich der Befüllungs- und Entleerungseinrichtung bewegten Funktionseinheit eingerichtet ist. Für eine Inertisierung eines Aufnahmeraums kann die Inertisierungseinrichtung über geeignete Anschlussmittel bzw. Schnittstellen und mit diesen koppelbare oder gekoppelte Absaugeinrichtungen nicht inerte Gase bzw. Gasgemische, wie z. B. Luft, aus dem Aufnahmeraum absaugen und/oder mit diesen koppelbare oder gekoppelte Gebläseeinrichtungen inerte Gase bzw. Gasgemische, wie z. B. Argon, Kohlenstoffdioxid, Stickstoff, etc., in den Aufnahmeraum einbringen.

Der Befüllungs- und Entleerungseinrichtung kann ferner eine Siebungseinrichtung zugeordnet sein, welche zur Siebung von in einen Aufnahmeraum einer in den Befüllungsbereich und/oder Entleerungsbereich bewegten Funktionseinheit einzufüllendem Baumaterial und/oder zur Siebung von aus einem Aufnahmeraum einer in den Befüllungsbereich und/oder Entleerungsbereich bewegten Funktionseinheit entleertem Baumaterial eingerichtet ist. Eine entsprechende Siebungseinrichtung ermöglicht eine Siebung von in einen funktionseinheitseitigen Aufnahmeraum einzufüllendem Baumaterial und/oder von aus einem funktionseinheitseitigem Aufnahmeraum entleertem Baumaterial. Die, gegebenenfalls motorisch antreibbare, Siebungseinrichtung kann wenigstens ein, gegebenenfalls motorisch antreibbares, Siebungselement umfassen, welches zur Aussiebung einer bestimmten Partikelgrößen(fraktion) eingerichtet ist.

Der Befüllungs- und Entleerungseinrichtung kann ferner eine Sicherungseinrichtung zuordenbar oder zugeordnet sein, welche zur positionsfesten Sicherung einer in den Befüllungs- bzw. Entleerungsbereich der Befüllungs- und Entleerungseinrichtung bewegten Funktionseinheit eingerichtet ist. Eine entsprechende Sicherungseinrichtung ermöglicht eine exakte und stabile Ausrichtung und Anordnung einer in den Befüllungs- bzw. Entleerungsbereich der Befüllungs- und Entleerungseinrichtung bewegten Funktionseinheit relativ zu dem Befüllungs- und Entleerungsbereich und erhöht so die Sicherheit der Befüllungs- und Entleerungseinrichtung. Die Sicherungseinrichtung kann wenigstens ein, insbesondere mechanisch und/oder magnetisch wirkendes, Sicherungselement, z. B. in Form eines mechanischen Stifts, Vorsprungs, etc. oder eines magnetisierbaren oder magnetischen Magnetelements, umfassen, welches in einem Sicherungszustand derart auf die zu sichernde Funktionseinheit einwirkt, dass die Funktionseinheit exakt und stabil angeordnet und ausgerichtet ist. Selbstverständlich können funktionseinheitseitig korrespondierende, insbesondere mechanische bzw. magnetische, Gegensicherungselemente, z. B. in Form von Aufnahmen für mechanische Sicherungsstifte oder in Form von magnetisierbaren oder magnetischen Magnetelementen, vorgesehen sein.

Zur Steuerung des Betriebs der Befüllungs- und Entleerungseinrichtung, d. h. insbesondere auch wenigstens einer der vorstehend genannten optionalen Einrichtungen der Befüllungs- undr Entleerungseinrichtung, d. h. der Temperiereinrichtung, der Inertisierungseinrichtung oder der Sicherungseinrichtung, kann die Befüllungs- und Entleerungseinrichtung eine Steuerungseinrichtung umfassen. Die Steuerung kann auf Grundlage wenigstens eines über die Erfassungseinrichtung, sofern vorhanden, erfassten Erfassungsparameters erfolgen. Beispielsweise kann eine Steuerung des Betriebs einer Temperiereinrichtung in Abhängigkeit einer erfassten Temperatur eines Baumaterials erfolgen, um das Baumaterial bedarfsgerecht zu temperieren. In entsprechender Weise kann eine Steuerung des Betriebs einer Inertisierungseinrichtung in Abhängigkeit einer erfassten Atmosphäre und/oder eines erfassten Drucks innerhalb eines funktionseinheitseitigen Aufnahmeraums erfolgen, um den Aufnahmeraum bedarfsgerecht zu inertisieren.

Die Erfindung ist anhand von Ausführungsbeispielen in den Zeichnungsfiguren näher erläutert. Dabei zeigen:
- Fig. 1: eine Prinzipdarstellung einer Anlage zur additiven Herstellung dreidimensionaler Objekte gemäß einem Ausführungsbeispiel;
- Fig. 2: eine Prinzipdarstellung eines Ausschnitts der Anlage gemäß dem in Fig. 1 gezeigten Ausführungsbeispiel; und
- Fig. 3: eine Prinzipdarstellung einer Befüllungs- und Entleerungseinrichtung gemäß einem Ausführungsbeispiel.

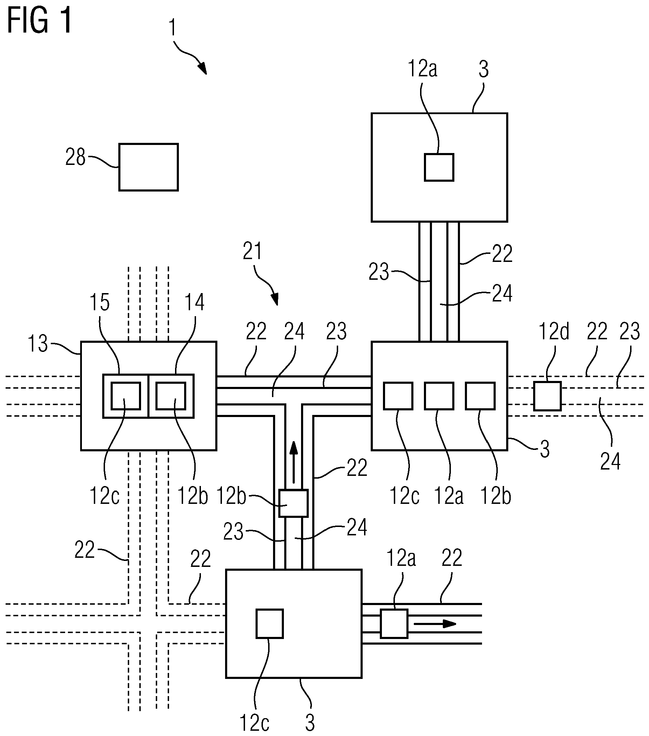

Fig. 1 zeigt eine Prinzipdarstellung einer Anlage 1 zur additiven Herstellung dreidimensionaler Objekte 2, d. h. beispielsweise technischer Bauteile bzw. technischer Bauteilgruppen, gemäß einem Ausführungsbeispiel in einer Aufsicht.

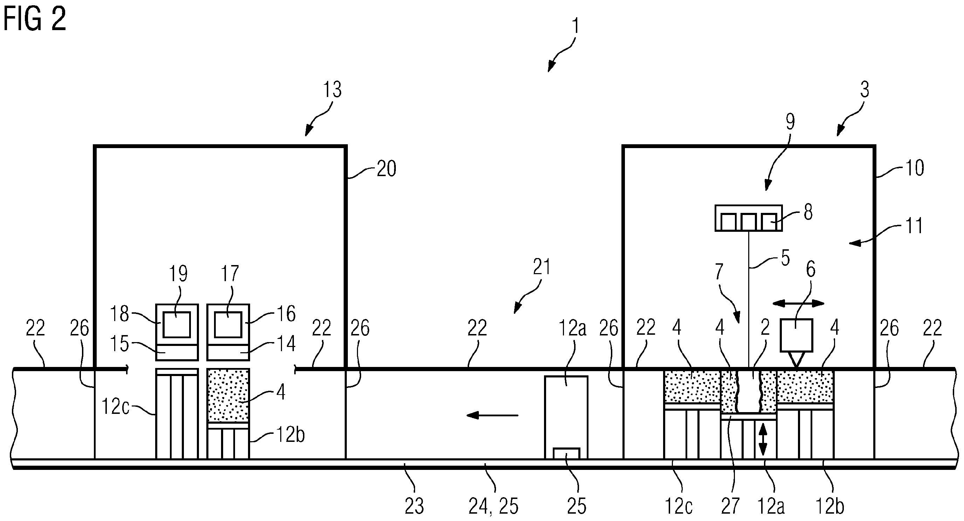

Die Anlage 1 umfasst eine oder mehrere stationäre Vorrichtung(en) 3 ("Baustation") zur additiven Herstellung dreidimensionaler Objekte 2 durch sukzessive schichtweise selektive Belichtung und damit einhergehende Verfestigung einzelner Baumaterialschichten aus einem verfestigbaren Baumaterial 4 vermittels eines Energiestrahls 5 (nähere funktionelle Details der Vorrichtung 3 ergeben sich aus Fig. 2). Bei dem verfestigbaren Baumaterial 4 kann es sich z. B. um ein Metallpulver handeln. Bei dem Energiestrahl 5 kann es sich um einen Laserstrahl handeln. Bei der Vorrichtung 3 kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren) handeln. Bei der Anlage 1 kann es sich entsprechend um eine Anlage zur Durchführung selektiver Laserschmelzverfahren (abgekürzt SLM-Verfahren) oder selektiver Lasersinterverfahren (abgekürzt SLS-Verfahren) handeln.

Die Vorrichtung 3 umfasst sämtliche zur Durchführung additiver Bauprozesse erforderlichen Funktionskomponenten. Zu entsprechenden Funktionskomponenten zählt eine, wie durch den horizontal ausgerichteten Doppelpfeil angedeutet, bewegbar gelagerte Beschichtereinrichtung 6 zur Ausbildung selektiv zu belichtender Baumaterialschichten in einer Bauebene 7 und eine, z. B. eine oder mehrere als Laserdiodenelemente ausgebildete oder solche umfassende Belichtungselemente 8 umfassende, Belichtungseinrichtung 9 zur Erzeugung eines Energiestrahls 5 zur selektiven Belichtung einer vermittels der Beschichtereinrichtung 6 in der Bauebene 7 ausgebildeten, selektiv zu belichtenden Baumaterialschicht. Die Funktionskomponenten sind in einer eine Prozesskammer 11 definierenden Gehäusestruktur 10 der Vorrichtung 3 angeordnet. Die Prozesskammer 11 ist inertisierbar, in der Prozesskammer 11 lässt sich sonach eine Schutzgasatmosphäre, z. B. eine Argonatmosphäre, und/oder ein bestimmtes Druckniveau ausbilden und aufrechterhalten.

Die Anlage 1 umfasst mehrere modulartige Funktionseinheiten 12. Der modulartige Aufbau der Funktionseinheiten 12 ergibt sich aus einer als "Modul" zu bezeichnenden, die äußere geometrische Gestalt der jeweiligen Funktionseinheit 12 (im Wesentlichen) bestimmenden Gehäusestruktur (nicht näher bezeichnet), in welcher die jeweiligen funktionellen Bestandteile der jeweiligen Funktionseinheit 12 aufgenommen sind.

Eine erste beispielhafte Funktionseinheit 12a ist als ein Baumodul ausgebildet. Ein solches Baumodul umfasst eine in einem auch als "Baukammer" zu bezeichnenden, kammerartigen Aufnahmeraum (nicht näher bezeichnet) bewegbar, insbesondere höhenverstellbar, relativ zu einem Grundkörper des Baumoduls gelagerte Bau- oder Trägerplatte (nicht näher bezeichnet), auf welcher ein additiver Aufbau wenigstens eines dreidimensionalen Objekts 2 erfolgen kann. Ein solches Baumodul dient im Rahmen der additiven Herstellung dreidimensionaler Objekte 2 der Lagerung eines herzustellenden Objekts 2 während der Durchführung eines additiven Bauvorgangs, vgl. die in Fig. 2 gezeigte Vorrichtung 3. Die Anlage 1 können mehrere entsprechende erste Funktionseinheiten 12a zugehörig sein.

Eine zweite beispielhafte Funktionseinheit 12b ist als ein Dosiermodul ausgebildet. Ein solches Dosiermodul umfasst einen zur Aufnahme von im Rahmen einer additiven Herstellung eines dreidimensionalen Objekts zu verfestigendem Baumaterial 2 eingerichteten kammerartigen Aufnahmeraum (nicht näher bezeichnet) und eine Dosiereinrichtung (nicht näher bezeichnet) zur Dosierung einer bestimmten Menge von zu verfestigendem Baumaterial 2 aus dem Aufnahmeraum. Ein solches Dosiermodul dient im Rahmen der additiven Herstellung dreidimensionaler Objekte 2 der Bereitstellung (Dosierung) einer bestimmten Menge an zu verfestigendem Baumaterial 2, welches vermittels einer Beschichtereinrichtung 6 unter Ausbildung einer definierten Baumaterialschicht gleichmäßig in einer Bauebene 7 verteilt wird, vgl. die in Fig. 2 gezeigte Vorrichtung 3. Der Anlage 1 können mehrere entsprechende zweite Funktionseinheiten 12b zugehörig sein.

Eine dritte beispielhafte Funktionseinheit 12c ist als ein Überlaufmodul ausgebildet. Ein solches Überlaufmodul umfasst einen zur Aufnahme von im Rahmen einer additiven Herstellung eines dreidimensionalen Objekts 2 nicht verfestigtem Baumaterial 4 eingerichteten kammerartigen Aufnahmeraum (nicht näher bezeichnet). Das Überlaufmodul dient im Rahmen der additiven Herstellung dreidimensionaler Objekte 2 dazu, nicht verfestigtes aus der Prozesskammer 11 der Vorrichtung 3 zu entfernendes bzw. entferntes Baumaterial 4 aufzunehmen. Der Anlage 1 können mehrere entsprechende dritte Funktionseinheiten 12c zugehörig sein.

Eine vierte beispielhafte Funktionseinheit 12d ist als ein Handhabungs- oder Handlingsmodul ausgebildet. Ein solches Handhabungs- oder Handlingsmodul umfasst wenigstens einen zur Aufnahme wenigstens eines additiv hergestellten Objekts 2 eingerichteten kammerartigen Aufnahmeraum (nicht näher bezeichnet). Über eine geeignete Schnittstelle (nicht gezeigt) kann eine Zugangs- oder Zugriffsmöglichkeit in den Aufnahmeraum zum "Auspacken" des Objekts 2 erfolgen. Der Zugang bzw. Zugriff kann über einen Bediener ("Glovebox") oder über einen Roboter erfolgen. Der Anlage 1 können mehrere entsprechende vierte Funktionseinheiten 12d zugehörig sein.

Wie sich im Weiteren ergibt, kann eine jeweilige Funktionseinheit 12a - 12d zwischen verschiedenen stationären, d. h. nicht bewegbaren, typischerweise fest mit einem Untergrund verbundenen Bestandteilen der Anlage 1 hin und her bewegt werden.

Die Anlage 1 umfasst eine oder mehrere stationäre Befüllungs- und Entleerungseinrichtung(en) 13 oder eine Befüllungseinrichtung, welche zur Befüllung eines Aufnahmeraums einer in einen Befüllungsbereich der Befüllungseinrichtung bewegten Funktionseinheit 12a - 12d mit Baumaterial 4 eingerichtet ist. Die Befüllungs- und Entleerungseinrichtung 13 ist zur Befüllung eines Aufnahmeraums einer in einen Befüllungsbereich 14 der Befüllungs- und Entleerungseinrichtung 13 bewegten Funktionseinheit 12a - 12d mit Baumaterial 4 und/oder zur Entleerung von in einem Aufnahmeraum einer in einen Entleerungsbereich 14 der Befüllungs- und Entleerungseinrichtung 13 bewegten Funktionseinheit 12a - 12d befindlichem Baumaterial 4 eingerichtet. Die Befüllungs- und Entleerungseinrichtung 13 kann zumindest im Hinblick auf entsprechende Befüllvorgänge als "Tankstation" bezeichnet werden. Sämtliche Ausführungen im Zusammenhang mit der Befüllungs- und Entleerungseinrichtung 13 gelten analog für eine Befüllungseinrichtung.

Die Befüllungs- und Entleerungseinrichtung 13 ist in einer inertisierbaren Gehäusestruktur 20 ausgebildet. In der Gehäusestruktur 20 kann eine inerte Atmosphäre bzw. ein bestimmtes Druckniveau, d. h. z. B. ein Über- oder Unterdruck, ausgebildet und aufrechterhalten werden.

In dem Befüllungsbereich 14 ist ein Befüllen eines Aufnahmeraums einer in den Befüllungsbereich 14 bewegten Funktionseinheit 12a - 12d mit Baumaterial 4 möglich. In dem in Fig. 2 gezeigten Ausschnitt ist beispielhaft ein Befüllen eines Aufnahmeraums einer zweiten Funktionseinheit 12b, d. h. eines Dosiermoduls, mit Baumaterial 4 gezeigt. Der Befüllungsbereich 14 umfasst eine Befüllungseinrichtung 16. Die Befüllungseinrichtung 16 umfasst eine Fördereinrichtung 17 zur Förderung von in einen jeweiligen Aufnahmeraum einzufüllendem Baumaterial 4. Die Fördereinrichtung 17 kann z. B. als Strömungserzeugungseinrichtung, insbesondere als Gebläseeinrichtung, ausgebildet sein, welche zur Erzeugung einer Einfüll(gebläse)strömung zum Einfüllen von Baumaterial 4 in einen jeweiligen Aufnahmeraum eingerichtet ist.

In dem Entleerungsbereich 15 ist ein Entleeren von in einem Aufnahmeraum einer in den Entleerungsbereich 15 bewegten Funktionseinheit 12a - 12d möglich. In dem in Fig. 2 gezeigten Ausschnitt ist beispielhaft ein Entleeren von Baumaterial 4 aus einem Aufnahmeraums einer dritten Funktionseinheit 12c, d. h. eines Überlaufmoduls, gezeigt. Der Entleerungsbereich 15 umfasst eine Entleerungseinrichtung 18. Die Entleerungseinrichtung 18 umfasst eine Fördereinrichtung 19 zur Förderung von aus einem jeweiligen Aufnahmeraum zu entleerendem Baumaterial 4. Die Entleerungseinrichtung 18 kann z. B. als Strömungserzeugungseinrichtung, insbesondere als Pumpeneinrichtung, ausgebildet sein, welche zur Erzeugung einer Entleerungs(saug)strömung zum Entleeren von Baumaterial 4 aus einem jeweiligen Aufnahmeraum eingerichtet ist.

Die Befüllungs- und Entleerungseinrichtung 13 kann mehrere (chemisch) unterschiedliche Baumaterialien 4 bevorraten, sodass eine individuelle Befüllung unterschiedlicher Funktionseinheiten 12a - 12d mit unterschiedlichen Baumaterialien 4 möglich ist. Eine erste in den Befüllungsbereich 14 bewegte Funktionseinheit 12a - 12d kann z. B. mit einem Stahlpulver befüllt werden, eine zweite in den Befüllungsbereich 14 bewegte Funktionseinheit 12a - 12d kann z. B. mit einem Aluminiumpulver befüllt werden. In analoger Weise ist eine individuelle Entleerung unterschiedlicher Funktionseinheiten 12a - 12d möglich; mithin können (chemisch) unterschiedliche Baumaterialien 4 aus unterschiedlichen Funktionseinheiten 12a - 12d entleert und getrennt voneinander bevorratet, weiterverarbeitet, etc. werden.

Die Anlage 1 umfasst weiterhin eine Tunnelstruktur 21. Die Tunnelstruktur 21 weist mehrere Tunnelabschnitte 22 auf, in welchen bzw. durch welche die Funktionseinheiten 12a - 12d bewegbar sind. In einem jeweiligen Tunnelabschnitt 22 ist wenigstens eine Bewegungsbahn 23, entlang welcher eine Funktionseinheit 12a - 12d durch den Tunnelabschnitt 22 bewegbar ist, ausgebildet oder angeordnet. In einem Tunnelabschnitt 22 können zumindest abschnittsweise mehrere Bewegungsbahnen 23, d. h. z. B. benachbart, insbesondere parallel, angeordnete Bewegungsbahnen 23 in einer oder mehreren Ebenen, auszubilden oder anzuordnen. Eine entsprechende Bewegungsbahn ermöglicht eine geführte Bewegung einer Funktionseinheit 12a - 12d in dem bzw. durch den jeweiligen Tunnelabschnitt 22.

Anhand von Fig. 1 ist ersichtlich, dass ein Tunnelabschnitt 22 in wenigstens einen weiteren, z. B. winklig zu diesem verlaufenden, Tunnelabschnitt 22 münden kann. Die Tunnelstruktur 21 umfasst - ähnlich einem aus dem Bahnverkehr bekannten Gleis- oder Schienensystem - mehrere an definierten Positionen ineinander mündende Tunnelabschnitte 22 (vgl. hierzu auch die strichlierte Darstellungen entsprechender Tunnelabschnitte 22 in Fig. 1). Mehrere Tunnelabschnitte 22 können zumindest abschnittsweise neben-, über- oder untereinander verlaufen. Die Tunnelstruktur kann sonach mehrere zumindest abschnittsweise neben-, über- oder untereinander, mithin in unterschiedlichen (horizontalen und/oder vertikalen) Ebenen verlaufende Tunnelabschnitte 22 umfassen.

Die Tunnelabschnitte 22 können inertisierbar sein, d. h. in diesen kann eine inerte Atmosphäre ein bestimmtes Druckniveau, d. h. z. B. ein Über- oder Unterdruck, ausgebildet und aufrechterhalten werden.

Die Funktion der Tunnelstruktur 21 bzw. der dieser zugehörigen Tunnelabschnitte 22 besteht darin, unterschiedliche stationäre Bestandteile der Anlage 1, d. h. z. B. Vorrichtungen 3 und die Befüllungs- und Entleerungseinrichtung 13, unmittelbar oder mittelbar, d. h. z. B. unter Zwischenschaltung wenigstens eines weiteren Tunnelabschnitts 21 und/oder eines weiteren stationären Bestandteils der Anlage 1, miteinander zu verbinden. Die Verbindung jeweiliger stationärer Bestandteile der Anlage 1 ermöglicht ein hin und her Bewegen jeweiliger Funktionseinheiten 12a - 12d zwischen jeweiligen stationären Bestandteilen der Anlage 1. Bewegungen jeweiliger Funktionseinheiten durch die Tunnelstruktur 21 sind vollautomatisiert möglich. Über einen oder mehrere Tunnelabschnitte 22 kann z. B. eine stationäre Vorrichtung 3 ("Baustation") mit der stationären Befüllungs- und Entleerungseinrichtung 13 ("Tankstation") verbunden werden.

Zur Bewegung jeweiliger Funktionseinheiten 12a - 12d umfasst die Anlage 1 eine mit einer (motorischen) Antriebseinrichtung gekoppelte Fördereinrichtung 24, über welche eine eine Funktionseinheit 12a - 12d in eine Bewegung versetzende Antriebskraft erzeugbar ist. Die Fördereinrichtung 24 kann ein tunnelstrukturseitig angeordnetes oder ausgebildetes Fördermittel 25 umfassen (vgl. Fig. 2), welches eingerichtet ist, eine Funktionseinheit 12a - 12d in eine Bewegung zu versetzen. Bei dem Fördermittel 25 kann es sich z. B. um ein mechanisches Fördermittel, d. h. z. B. um einen Band-, Ketten- oder Rollenförderer, handeln, welches durch seine räumliche Erstreckung innerhalb eines jeweiligen Tunnelabschnitts 22 eine Förderstrecke und somit die Bewegungsbahn 23 definiert, entlang welcher eine Funktionseinheit 12a - 12d bewegbar ist. Anhand von Fig. 2 ist ersichtlich, dass ein entsprechendes Fördermittel z. B. boden- oder wandseitig an einer Wandung eines Tunnelabschnitts 21 angeordnet oder ausgebildet sein kann.

Denkbar ist es auch, dass die Fördereinrichtung 24 jeweilige funktionseinheitseitig angeordnete oder ausgebildete Fördermittel 25 umfasst, welche eingerichtet sind, die mit diesen ausgestatteten Funktionseinheiten 12a - 12d in eine Bewegung zu versetzen (vgl. Fig. 2). Bei einem solchen Fördermittel 25 kann es sich z. B. um eine in eine jeweilige Funktionseinheit 12a - 12d integrierte (elektro)motorische Antriebseinrichtung (nicht näher bezeichnet) handeln. Derart kann die Bewegungsfreiheit einer Funktionseinheit 12a - 12d erweitert werden, da z. B. Rotationsbewegungen um eine vertikale Achse möglich sind.

Die Auswahl einer Bewegungsbahn einer oder mehrerer Funktionseinheiten 12a - 12d zwischen jeweiligen stationären Bestandteilen der Anlage 1 kann auf Grundlage bestimmter Priorisierungen bestimmter Funktionseinheiten 12a - 12d erfolgen. Für höher priorisierte Funktionseinheiten 12a - 12d können streckenmäßig kürzere bzw. schnellere Bewegungsbahnen 23 ausgewählt werden als für niedriger priorisierte Funktionseinheiten 12a - 12d. Gleichermaßen können höher priorisierte Funktionseinheiten 12a - 12d mit einer im Vergleich zu niedriger priorisierten Funktionseinheiten 12a - 12d höheren Geschwindigkeit bewegt werden.

Die Steuerung sämtlicher Bewegungen der in der Tunnelstruktur 21 bewegten Funktionseinheiten 12a - 12d erfolgt über eine zentrale Steuerungseinrichtung 28, welche zweckmäßig unmittelbar oder mittelbar mit jeweiligen Funktionseinheiten 12a - 12d, welche hierfür mit geeigneten, Kommunikationseinrichtungen (nicht näher bezeichnet) ausgestattet sein können, z. B. funkbasiert, kommuniziert. In der Steuerungseinrichtung 28 liegen sämtliche für die Bewegung jeweiliger Funktionseinheiten 12a - 12d innerhalb der Tunnelstruktur 21 relevanten Informationen, d. h. insbesondere jeweilige Bewegungsinformation, d. h. z. B. Geschwindigkeitsinformation, jeweilige Positionsinformation, d. h. z. B. Start- und Zielinformationen, jeweilige Priorisierungsinformationen, etc. vor. Die Steuerung der Bewegungen der in der Tunnelstruktur 21 bewegten Funktionseinheiten 12a - 12d kann vollautomatisch erfolgen.

Um mit der Tunnelstruktur 21 verbunden werden zu können, weisen die stationären Bestandteile der Anlage 1 einen Verbindungsabschnitt 26 auf, über welchen diese mit der Tunnelstruktur 21 verbindbar oder verbunden sind. Anhand von Fig. 2 ist ein Verbindungsabschnitt 26 der Vorrichtung 3 ersichtlich, über welchen die Vorrichtung 3 mit der Tunnelstruktur 21, d. h. einem Tunnelabschnitt 22, verbunden ist. Entsprechende Funktionseinheiten 12a - 12d sind ausgehend von der Vorrichtung 3 in die Tunnelstruktur 21 oder ausgehend von der Tunnelstruktur 21 in die Vorrichtung 3 bewegbar. Analog der Vorrichtung 3 weist auch die Befüllungs- und Entleerungseinrichtung 13 einen Verbindungsabschnitt 26 auf, über welchen die Befüllungs- und/ Entleerungseinrichtung 13 mit der Tunnelstruktur 21, d. h. einem Tunnelabschnitt 22, verbunden ist. Mithin sind Funktionseinheiten 12a - 12d ausgehend von der Befüllungs- und Entleerungseinrichtung 13 in die Tunnelstruktur 21 oder ausgehend von der Tunnelstruktur 21 in die Befüllungs- und Entleerungseinrichtung 13 bewegbar.

In jeweiligen stationären Bestandteilen der Anlage 1, d. h. z. B. in der Vorrichtung 3 bzw. in der Befüllungs- und Entleerungseinrichtung 13, ist ebenso ein Tunnelabschnitt 22 der Tunnelstruktur 21 angeordnet oder ausgebildet, welcher über den jeweiligen Verbindungsabschnitt 26 mit einem außerhalb des jeweiligen stationären Bestandteils der Anlage 1 angeordneten oder ausgebildeten Tunnelabschnitt 22 kommuniziert (vgl. Fig. 2).

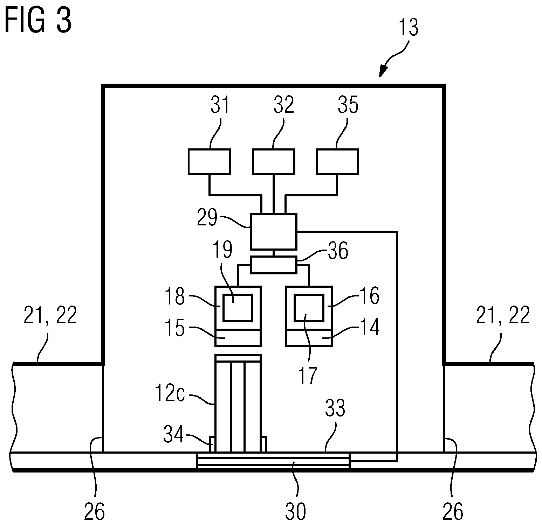

Fig. 3 zeigt eine Prinzipdarstellung einer Befüllungs- und Entleerungseinrichtung 13, anhand welcher bestimmte Modifikationen der Befüllungs- und Entleerungseinrichtung 13 erläutert werden.

Der in Fig. 3 gezeigten Befüllungs- und Entleerungseinrichtung 13 ist eine Erfassungseinrichtung 29 zugeordnet. Die Erfassungseinrichtung 29 umfasst hard- und/oder softwaremäßig implementierte Erfassungselemente (nicht gezeigt), über welche sich unterschiedliche Erfassungsparameter erfassen lassen. Sämtliche von der Erfassungseinrichtung 29 erfassten Erfassungsparameter können über ein, gegebenenfalls drahtloses, Daten- bzw. Kommunikationsnetzwerk (nicht gezeigt) an wenigstens einen Kommunikationspartner, d. h. z. B. die Steuerungseinrichtung 28 der Anlage 1 übertragen werden.

Die Erfassungseinrichtung 28 kann zur Erfassung einer in den Befüllungsbereich 14 und/oder in den Entleerungsbereich 15 bewegten Funktionseinheit 12a - 12d eingerichtet sein. Über die Erfassungseinrichtung 28 ist sonach erfassbar, ob eine Funktionseinheit 12a - 12d in den Befüllungs- bzw. Entleerungsbereich 14, 15 bewegt ist. In dem Fall einer Erfassung einer in den Befüllungs- bzw. Entleerungsbereich 14, 15 bewegten Funktionseinheit 12a - 12d kann weiterhin erfassbar sein, um welche Art von Funktionseinheit 12a - 12d es sich konkret handelt. Die Erfassung einer in den Befüllungs- bzw. Entleerungsbereich 14, 15 bewegten Funktionseinheit 12a - 12d respektive deren Art kann optisch, d. h. z. B. vermittels eines optischen Scanvorgangs, oder mechanisch, d. h. z. B. vermittels einer Erfassung des auf eine in einem Befüllungs- und/oder Entleerungsbereich 14, 15 angeordnete oder ausgebildete Gewichtssensorik 30 wirkenden Gewichts der Funktionseinheit 12a - 12d erfolgen.

Die Erfassungseinrichtung 29 kann (auch) zur Erfassung wenigstens eines Zustandsparameters, insbesondere der Funktionsfähigkeit, wenigstens eines Funktionselements einer in den Befüllungs- bzw. Entleerungsbereich 14, 15 bewegten Funktionseinheit 12a - 12d eingerichtet sein. Über die Erfassungseinrichtung 28 sind sonach bestimmte Zustandsparameter, d. h. insbesondere die Funktionsfähigkeit, bestimmter Funktionselemente einer Funktionseinheit 12a - 12d erfassbar. Für das Beispiel eines Baumoduls (vgl. erste Funktionseinheit 12a) ist z. B. erfassbar, ob die ordnungsgemäße Funktionsfähigkeit der bewegbar gelagerten Bau- oder Trägerplatte 27 gegeben ist. Hierfür kann die Erfassungseinrichtung z. B. geeignete Steuerinformationen an einen mit der Bau- oder Trägerplatte 27 gekoppelten Antrieb (nicht gezeigt) übermitteln und z. B. eine örtliche und/oder zeitlich aufgelöste Erfassung (Überwachung) einer Bewegung der Bauplatte 27 unter den durch die Steuerinformationen bestimmten Antriebsbedingungen durchführen.

Die Erfassungseinrichtung 29 kann (auch) zur Erfassung wenigstens eines, insbesondere physikalischen, Zustandsparameters innerhalb eines, insbesondere zumindest abschnittsweise mit Baumaterial 4 befüllten, Aufnahmeraums einer in den Befüllungs- bzw. Entleerungsbereich 14, 15 bewegten Funktionseinheit 12a - 12d eingerichtet sein. Über die Erfassungseinrichtung 29 sind bestimmte, d. h. insbesondere physikalische, Zustandsparameter, d. h. z. B. Atmosphäre, Druck, Feuchtigkeit, Temperatur, etc., innerhalb funktionseinheitseitiger Aufnahmeräume erfassbar. Für das Beispiel eines Dosier- oder Überlaufmoduls (vgl. zweite, dritte Funktionseinheit 12b, 12c) ist z. B. erfassbar, welche(r) Atmosphäre, Druck, Feuchtigkeit, Temperatur, etc. innerhalb des jeweiligen Aufnahmeraums gegeben ist. Die Erfassung entsprechender Zustandsparameter kann vermittels geeigneter, z. B. messsondenartig ausgebildeter, Erfassungselemente (nicht gezeigt) erfolgen, welche entsprechende Zustandsparameter über eine hierfür vorgesehene funktionseinheitseitige Schnittstelle erfassen. Eine funktionseinheitseitige Schnittstelle kann z. B. durch eine Zugangsmöglichkeit an und/oder in einen funktionseinheitseitigen Aufnahmeraum realisiert sein.

Weiterhin kann die Erfassungseinrichtung 29 (auch) zur Erfassung eines, insbesondere physikalischen, Zustandsparameters eines Baumaterials 4, welches in einem Aufnahmeraum einer in den Befüllungs- bzw. Entleerungsbereich 14, 15 bewegten Funktionseinheit 12a - 12d aufgenommen ist, eingerichtet sein. Über die Erfassungseinrichtung 29 sind allgemein bestimmte, d. h. insbesondere physikalische, Zustandsparameter, d. h. z. B. Dichte, Feuchtigkeit, Temperatur, etc., eines innerhalb eines funktionseinheitseitigen Aufnahmeraums befindlichen Baumaterials 4 erfassbar. Für das Beispiel eines Dosier- oder Überlaufmoduls (vgl. zweite, dritte Funktionseinheit 12b, 12c) ist z. B. erfassbar, welche Dichte, Feuchtigkeit, Temperatur, etc. für ein Baumaterial 4 gegeben ist. Die Erfassung entsprechender Zustandsparameter kann wiederum vermittels geeigneter, z. B. messsondenartig ausgebildeter, Erfassungselemente (nicht gezeigt) erfolgen, welche entsprechende Zustandsparameter über eine hierfür vorgesehene funktionseinheitseitige Schnittstelle erfassen. Eine funktionseinheitseitige Schnittstelle kann wiederum z. B. durch eine Zugangsmöglichkeit an und/oder in einen funktionseinheitseitigen Aufnahmeraum realisiert sein.

Schließlich kann die Erfassungseinrichtung 29 z. B. (auch) zur Erfassung eines Füllstands eines Baumaterials 4 in einem Aufnahmeraum einer in den Befüllungs- bzw. Entleerungsbereich 14, 15 bewegten Funktionseinheit 12a - 12d eingerichtet sein. Über die Erfassungseinrichtung 29 sind sonach Füllstände eines in einem funktionseinheitseitigen Aufnahmeraum befindlichen Baumaterials 4 erfassbar. Für das Beispiel eines Dosier- oder Überlaufmoduls (vgl. zweite, dritte Funktionseinheit 12b, 12c) ist sonach erfassbar, welcher Füllstand innerhalb des jeweiligen Aufnahmeraums gegeben ist. Die Erfassung entsprechender Füllstände kann auch hier vermittels geeigneter, z. B. messsondenartig ausgebildeter, Erfassungselemente (nicht gezeigt) erfolgen, welche entsprechende Füllstände über eine hierfür vorgesehene funktionseinheitseitige Schnittstelle erfassen. Eine funktionseinheitseitige Schnittstelle kann auch hier z. B. durch eine Zugangsmöglichkeit an und/oder in einen funktionseinheitseitigen Aufnahmeraum realisiert sein.

Die Befüllungs- und Entleerungseinrichtung 13 umfasst weiterhin bestimmte Einrichtungen, über welche sich in Abhängigkeit des jeweils erfassten Erfassungsparameters bestimmte Maßnahmen treffen lassen, um z. B. Einfluss auf die Güte bzw. Verarbeitbarkeit bzw. Wiederverwendbarkeit von in einen funktionseinheitseitigen Aufnahmeraum einzufüllenden bzw. von aus einem funktionseinheitseitigen Aufnahmeraum zu entleerenden Baumaterial 4 zu nehmen:
Der Befüllungs- und Entleerungseinrichtung 13 ist eine Temperiereinrichtung 31 zugeordnet, welche zur Temperierung eines Aufnahmeraums einer in den Befüllungs- bzw. Entleerungsbereich 14, 15 bewegten Funktionseinheit 12a - 12d und/oder zur Temperierung eines Baumaterials 4, welches in einem Aufnahmeraum einer in den Befüllungs- bzw. Entleerungsbereich 14, 15 bewegten Funktionseinheit 12a - 12d aufgenommen ist, eingerichtet ist. Die Temperierung des Aufnahmeraums bzw. des Baumaterials 4, worunter typischerweise eine Erwärmung zu verstehen ist, kann über eine (direkte) Temperierung der Funktionseinheit 12a - 12d und/oder über eine Steuerung (Aktivierung) funktionseinheitseitig vorgesehener Temperiermittel (nicht gezeigt), d. h. z. B. Heizelemente, erfolgen.

Weiterhin ist der Befüllungs- und Entleerungseinrichtung 13 eine Inertisierungseinrichtung 32 zugeordnet, welche zur Inertisierung eines mit Baumaterial 4 befüllten Aufnahmeraums einer in den Befüllungs- bzw. Entleerungsbereich 14, 15 bewegten Funktionseinheit 12a - 12d eingerichtet ist. Für eine Inertisierung eines Aufnahmeraums kann die Inertisierungseinrichtung 31 über geeignete Anschlussmittel (nicht gezeigt) bzw. Schnittstellen und mit diesen koppelbare oder gekoppelte Absaugeinrichtungen (nicht gezeigt) nicht inerte Gase bzw. Gasgemische, wie z. B. Luft, aus dem Aufnahmeraum absaugen und/oder mit diesen koppelbare oder gekoppelte Gebläseeinrichtungen (nicht gezeigt) inerte Gase bzw. Gasgemische, wie z. B. Argon, Kohlenstoffdioxid, Stickstoff, etc., in den Aufnahmeraum einbringen.

Der Befüllungs- und Entleerungseinrichtung 13 ist ferner eine Siebungseinrichtung 36 zugeordnet, welche zur Siebung von in einen Aufnahmeraum einer in den Befüllungsbereich 14 bewegten Funktionseinheit 12a - 12d einzufüllendem Baumaterial 4 und/oder zur Siebung von aus einem Aufnahmeraum einer in den Entleerungsbereich 15 bewegten Funktionseinheit 12a - 12d entleertem Baumaterial 4 eingerichtet ist. Die motorisch antreibbare Siebungseinrichtung 36 ermöglicht eine Siebung von in einen funktionseinheitseitigen Aufnahmeraum einzufüllendem Baumaterial 4 und/oder von aus einem funktionseinheitseitigem Aufnahmeraum entleertem Baumaterial 4. Die Siebungseinrichtung 36 umfasst wenigstens ein Siebungselement (nicht näher bezeichnet), welches zur Aussiebung einer bestimmten Partikelgrößen(fraktion) eingerichtet ist.

Der Befüllungs- und Entleerungseinrichtung 13 ist ferner eine Sicherungseinrichtung 33 zugeordnet, welche zur positionsfesten Sicherung einer in den Befüllungs- bzw. Entleerungsbereich 14, 15 bewegten Funktionseinheit 12a - 12d eingerichtet ist. Die Sicherungseinrichtung 33 ermöglicht eine exakte und stabile Ausrichtung und Anordnung einer in den Befüllungs- bzw. Entleerungsbereich 14, 15 bewegten Funktionseinheit 12a - 12d relativ zu dem Befüllungs- und/oder Entleerungsbereich 14, 15. Die umfasst Sicherungseinrichtung 33, insbesondere mechanisch und/oder magnetisch wirkendes, Sicherungselemente 34, z. B. in Form von mechanischen Stiften oder Magnetelementen, welche in einem Sicherungszustand derart auf die zu sichernde Funktionseinheit 12a - 12d einwirken, dass diese exakt und stabil angeordnet und ausgerichtet ist.

Zur Steuerung des Betriebs der Befüllungs- und Entleerungseinrichtung 13, d. h. auch der Temperiereinrichtung 31, der Inertisierungseinrichtung 32, der Siebungseinrichtung 36 und der Sicherungseinrichtung 33, kann die Befüllungs- und Entleerungseinrichtung 13 eine eigene Steuerungseinrichtung 35 umfassen. Die Steuerung kann auf Grundlage wenigstens eines über die Erfassungseinrichtung 29 erfassten Erfassungsparameters erfolgen.

Einzelne, mehrere oder sämtliche der mit Bezug auf ein bestimmtes Ausführungsbeispiel gezeigten Merkmale lassen sich auf wenigstens ein anderes Ausführungsbeispiel übertragen.

## Patentansprüche

1. Anlage (1) zur additiven Herstellung dreidimensionaler Objekte (2), umfassend:
- wenigstens eine bewegbare, modulartige Funktionseinheit (12a - 12d), welche einen zur Aufnahme von Baumaterial (4) eingerichteten Aufnahmeraum aufweist,
- eine Tunnelstruktur (21), welche wenigstens einen Tunnelabschnitt (22) aufweist, in welchem wenigstens eine modulartige Funktionseinheit (12a - 12d) bewegbar ist,
- wenigstens eine Vorrichtung (3), welche zur additiven Herstellung eines dreidimensionalen Objekts (2) durch sukzessive schichtweise selektive Belichtung und damit einhergehende Verfestigung von ausgebildeten Baumaterialschichten vermittels eines Energiestahls (5) eingerichtet ist, wobei die Vorrichtung (3) einen Verbindungsabschnitt (26) aufweist, über welchen die Vorrichtung (3) mit der Tunnelstruktur (21) verbindbar oder verbunden ist, sodass eine modulartige Funktionseinheit (12a - 12d) ausgehend von der Vorrichtung (3) in die Tunnelstruktur (21) oder ausgehend von der Tunnelstruktur (21) in die Vorrichtung (3) bewegbar ist,
- eine Befüllungs- und Entleerungseinrichtung (13), welche zur Befüllung eines Aufnahmeraums einer in einen Befüllungsbereich (14) der Befüllungs- und Entleerungseinrichtung (13) bewegten Funktionseinheit (12a - 12d) mit Baumaterial (4) und zur Entleerung von in einem Aufnahmeraum einer in einen Entleerungsbereich (15) der Befüllungs- und Entleerungseinrichtung (13) bewegten Funktionseinheit (12a - 12d) befindlichem Baumaterial (4) eingerichtet ist, wobei die Befüllungs- und Entleerungseinrichtung (13) einen Verbindungsabschnitt (26) aufweist, über welchen die Befüllungs- und Entleerungseinrichtung (13) mit der Tunnelstruktur (21) verbindbar oder verbunden ist, sodass eine modulartige Funktionseinheit (12a - 12d) ausgehend von der Befüllungs- und Entleerungseinrichtung (13) in die Tunnelstruktur (21) oder ausgehend von der Tunnelstruktur (21) in die Befüllungs- und Entleerungseinrichtung (13) bewegbar ist oder
- eine Befüllungseinrichtung (13), welche zur Befüllung eines Aufnahmeraums einer in einen Befüllungsbereich (14) der Befüllungseinrichtung (13) bewegten Funktionseinheit (12a - 12d) mit Baumaterial (4) eingerichtet ist, wobei die Befüllungseinrichtung (13) einen Verbindungsabschnitt (26) aufweist, über welchen die Befüllungseinrichtung (13) mit der Tunnelstruktur (21) verbindbar oder verbunden ist, sodass eine modulartige Funktionseinheit (12a - 12d) ausgehend von der Befüllungseinrichtung (13) in die Tunnelstruktur (21) oder ausgehend von der Tunnelstruktur (21) in die Befüllungseinrichtung (13) bewegbar ist.

2. Anlage nach Anspruch 1, **dadurch gekennzeichnet, dass** die Befüllungs- und/oder Entleerungseinrichtung (13) in einer inertisierbaren Gehäusestruktur (20) angeordnet oder ausgebildet ist.

3. Anlage nach Anspruch 1 oder 2, **gekennzeichnet durch** eine der Befüllungs- und/oder Entleerungseinrichtung (13) zugeordnete Erfassungseinrichtung (29), welche
- zur Erfassung einer in einen Befüllungsbereich (14) und/oder in einen Entleerungsbereich (15) der Befüllungs- und/oder Entleerungseinrichtung (13) bewegten Funktionseinheit (12a - 12d) und/oder
- zur Erfassung wenigstens eines Zustandsparameters, insbesondere der Funktionsfähigkeit, wenigstens eines Funktionselements einer in den Befüllungsbereich (14) und/oder Entleerungsbereich (15) bewegten Funktionseinheit (12a - 12d) und/oder
- zur Erfassung wenigstens eines, insbesondere physikalischen, Zustandsparameters innerhalb eines, insbesondere zumindest abschnittsweise mit Baumaterial (4) befüllten, Aufnahmeraums einer in den Befüllungsbereich (14) und/oder Entleerungsbereich (15) bewegten Funktionseinheit (12a - 12d) und/oder
- zur Erfassung eines Füllstands eines Baumaterials (4), welches in einem Aufnahmeraum einer in den Befüllungsbereich (14) und/oder Entleerungsbereich (15) bewegten Funktionseinheit (12a - 12d) aufgenommen ist, und/oder
- zur Erfassung wenigstens eines Zustandsparameters eines Baumaterials (4), welches in einem Aufnahmeraum einer in den Befüllungsbereich (14) und/oder Entleerungsbereich (15) bewegten Funktionseinheit (12a - 12d) aufgenommen ist, eingerichtet ist.

4. Anlage nach einem der vorhergehenden Ansprüche, **gekennzeichnet durch** eine der Befüllungs- und/oder Entleerungseinrichtung (13) zugeordnete Temperiereinrichtung (31), welche zur Temperierung wenigstens eines, insbesondere zumindest abschnittsweise mit Baumaterial (4) befüllten, Aufnahmeraums einer in den Befüllungsbereich (14) und/oder Entleerungsbereich (15) bewegten Funktionseinheit (12a - 12d) und/oder zur Temperierung eines Baumaterials (4), welches in einem Aufnahmeraum einer in den Befüllungsbereich (14) und/oder Entleerungsbereich (15) bewegten Funktionseinheit (12a - 12d) aufgenommen ist, eingerichtet ist.

5. Anlage nach einem der vorhergehenden Ansprüche, **gekennzeichnet durch** eine der Befüllungs- und/oder Entleerungseinrichtung (13) zugeordnete Inertisierungseinrichtung (32), welche zur Inertisierung wenigstens eines, insbesondere zumindest abschnittsweise mit Baumaterial (4) befüllten, Aufnahmeraums einer in den Befüllungsbereich (14) und/oder Entleerungsbereich (15) bewegten Funktionseinheit (12a - 12d) eingerichtet ist.

6. Anlage nach einem der vorhergehenden Ansprüche, **gekennzeichnet durch** eine der Befüllungs- und/oder Entleerungseinrichtung (13) zugeordnete Siebungseinrichtung (36), welche zur Siebung von in einen Aufnahmeraum einer in den Befüllungsbereich (14) und/oder Entleerungsbereich (15) bewegten Funktionseinheit (12a - 12d) einzufüllendem Baumaterial (4) und/oder zur Siebung von aus einem Aufnahmeraum einer in den Befüllungsbereich (14) und/oder Entleerungsbereich (15) bewegten Funktionseinheit (12a - 12d) entleertem Baumaterial (4) eingerichtet ist.

7. Anlage nach einem der vorhergehenden Ansprüche, **gekennzeichnet durch** eine der Befüllungs- und/oder Entleerungseinrichtung (13) zugeordnete Sicherungseinrichtung (33), welche zur positionsfesten Sicherung einer in den Befüllungsbereich (14) und/oder Entleerungsbereich (15) bewegten Funktionseinheit (12a - 12d) eingerichtet ist, wobei die Sicherungseinrichtung (33) wenigstens ein, insbesondere mechanisch und/oder magnetisch wirkendes, Sicherungselement (34) umfasst.

8. Anlage nach einem der Ansprüche 3 bis 7, **gekennzeichnet durch** eine der Befüllungs- und/oder Entleerungseinrichtung (13) zugeordnete Steuerungseinrichtung (35) zur Steuerung des Betriebs der Befüllungs- und/oder Entleerungseinrichtung (13) und/oder der Temperiereinrichtung (31) und/oder der Inertisierungseinrichtung (32) und/oder der Siebungseinrichtung (36) und/oder der Sicherungseinrichtung (33) in Abhängigkeit wenigstens eines Erfassungsergebnisses der Erfassungseinrichtung (29).

9. Anlage nach einem der vorhergehenden Ansprüche, **gekennzeichnet durch** eine Fördereinrichtung (24), wobei die Fördereinrichtung (24) wenigstens ein tunnelstrukturseitig angeordnetes oder ausgebildetes Fördermittel (25)umfasst, welches eingerichtet ist, eine Funktionseinheit (12a - 12d) in eine Bewegung zu versetzen, und/oder wenigstens ein funktionseinheitseitig angeordnetes oder ausgebildetes Fördermittel (25) umfasst, welches eingerichtet ist, die Funktionseinheit (12a - 12d) in eine Bewegung zu versetzen.

10. Anlage nach einem der vorhergehenden Ansprüche, **dadurch gekennzeichnet, dass**
- eine Funktionseinheit (12a) als ein Baumodul, welches einen zur Aufnahme einer bewegbar, insbesondere höhenverstellbar, relativ zu einem Grundkörper des Baumoduls (2a) gelagerten Bauplatte (27), auf welcher ein dreidimensionales Objekt (2) additiv herstellbar ist, eingerichteten Aufnahmeraum umfasst, ausgebildet ist, oder
- eine Funktionseinheit (12b) als ein Dosiermodul, welches einen zur Aufnahme von im Rahmen einer additiven Herstellung eines dreidimensionalen Objekts (2) zu verfestigendem Baumaterial (4) eingerichteten Aufnahmeraum (5) und eine Dosiereinrichtung zur Dosierung einer bestimmten Menge von im Rahmen einer additiven Herstellung eines dreidimensionalen Objekts (2) zu verfestigendem Baumaterial (4) aus dem Aufnahmeraum umfasst, ausgebildet ist, oder
- eine Funktionseinheit (2) als ein Überlaufmodul (2b), welches einen zur Aufnahme von im Rahmen einer additiven Herstellung eines dreidimensionalen Objekts (2) nicht verfestigtem Baumaterial (4) eingerichteten Aufnahmeraum umfasst, ausgebildet ist, oder
- eine Funktionseinheit (12d) als ein Handhabungs- oder Handlingsmodul, welches einen zur Aufnahme wenigstens eines additiv hergestellten Objekts (2) eingerichteten Aufnahmeraum umfasst, ausgebildet ist.

## Claims

1. Plant (1) for additive manufacturing of three-dimensional objects (2), comprising:
- at least one movable, module-like functional unit (12a - 12d), which has a receiving space set up to receive building material (4),
- a tunnel structure (21) having at least one tunnel section (22) in which at least one module-like functional unit (12a - 12d) is movable
- at least one device (3) which is set up for the additive production of a three-dimensional object (2) by successive layer-by-layer selective exposure and associated solidification of formed building material layers by means of an energy beam (5), the device (3) having a connecting section (26), via which the device (3) can be connected or is connected to the tunnel structure (21), so that a module-like functional unit (12a - 12d) can be moved from the device (3) into the tunnel structure (21) or from the tunnel structure (21) into the device (3),
- a filling and emptying device (13), which is arranged for filling a receiving space of a functional unit (12a - 12d) moved into a filling region (14) of the filling and emptying device (13) with building material (4) and for emptying building material (4) located in a receiving space of a functional unit (12a - 12d) moved into an emptying region (15) of the filling and emptying device (13), the filling and emptying device (13) having a connecting section (26) via which the filling and emptying device (13) can be connected or is connected to the tunnel structure (21), so that a module-like functional unit (12a - 12d) can be moved from the filling and emptying device (13) into the tunnel structure (21) or from the tunnel structure (21) into the filling and emptying device (13), or
- a filling device (13) which is set up for filling a receiving space of a functional unit (12a - 12d) moved into a filling region (14) of the filling device (13) with building material (4), the filling device (13) having a connecting section (26), via which the filling device (13) can be connected or is connected to the tunnel structure (21), so that a module-like functional unit (12a - 12d) can be moved starting from the filling device (13) into the tunnel structure (21) or starting from the tunnel structure (21) into the filling device (13).

2. Plant according to claim 1, **characterized in that** the filling and/or emptying device (13) is arranged or formed in an inertizable housing structure (20).

3. Plant according to claim 1 or 2, **characterized by** a detection device (29) which is assigned to the filling and/or emptying device (13) and which is used
- for detecting a functional unit (12a - 12d) moved into a filling region (14) and/or into an emptying region (15) of the filling and/or emptying device (13) and/or
- for detecting at least one state parameter, in particular the functional capability, of at least one functional element of a functional unit (12a - 12d) moved into the filling region (14) and/or emptying region (15) and/or
- for detecting at least one, in particular physical, state parameter within a receiving space, in particular at least partially filled with building material (4), of a functional unit (12a - 12d) moved into the filling area (14) and/or emptying area (15) and/or
- for detecting a filling level of a building material (4) which is accommodated in a receiving space of a functional unit (12a - 12d) moved into the filling region (14) and/or emptying region (15), and/or
- for detecting at least one state parameter of a building material (4) which is accommodated in an accommodating space of a functional unit (12a - 12d) moved into the filling region (14) and/or emptying region (15).

4. Plant according to one of the preceding claims, **characterized by** a temperature controlling device (31) which is assigned to the filling and/or emptying device (13) and is designed to control the temperature of at least one functional unit (12a - 12d) filled, in particular at least in sections, with building material (4), of a functional unit (12a - 12d) moved into the filling region (14) and/or emptying region (15) and/or for tempering a building material (4) which is accommodated in a receiving space of a functional unit (12a - 12d) moved into the filling region (14) and/or emptying region (15).

5. Plant according to one of the preceding claims, **characterized by** an inerting device (32) which is assigned to the filling and/or emptying device (13) and is set up for inerting at least one receiving space, in particular at least partially filled with building material (4), of a functional unit (12a - 12d) moved into the filling region (14) and/or emptying region (15).

6. Plant according to one of the preceding claims, **characterized by** a screening device (36) associated with the filling and/or emptying device (13), which is set up for screening building material (4) to be fed into a receiving space of a functional unit (12a - 12d) moved into the filling region (14) and/or emptying region (15) and/or for screening building material (4) emptied from a receiving space of a functional unit (12a - 12d) moved into the filling region (14) and/or emptying region (15).

7. Plant according to one of the preceding claims, **characterized by** a securing device (33) which is assigned to the filling and/or emptying device (13) and is set up for positionally fixed securing of a functional unit (12a - 12d) moved into the filling region (14) and/or emptying region (15), the securing device (33) comprising at least one, in particular mechanically and/or magnetically acting, securing element (34).

8. Plant according to one of the claims 3 to 7, **characterized by** a controlling device (35) assigned to the filling and/or emptying device (13) for controlling the operation of the filling and/or emptying device (13) and/or the temperature control device (31) and/or the inerting device (32) and/or the screening device (36) and/or the securing device (33) as a function of at least one detection result of the detection device (29).

9. Plant according to one of the preceding claims, **characterized by** a conveying device (24), the conveying device (24) comprising at least one conveying means (25) which is arranged or designed on the tunnel structure side and is set up to set a functional unit (12a - 12d) in motion, and/or comprising at least one conveying means (25) which is arranged or designed on the functional unit side and is set up to set the functional unit (12a - 12d) in motion.

10. Plant according to one of the preceding claims, **characterized in that**
- a functional unit (12a) is designed as a building module, which comprises a receiving space set up to receive a building plate (27) which is mounted movably, in particular vertically adjustably, relative to a base body of the building module (2a) and on which a three-dimensional object (2) can be additively produced, or
- a functional unit (12b) is designed as a metering module, which comprises a receiving space (5) set up to receive building material (4) to be solidified as part of additive manufacturing of a three-dimensional object (2), and a metering device for metering a specific amount of building material (4) to be solidified as part of additive manufacturing of a three-dimensional object (2) from the receiving space, or
- a functional unit (2) is designed as an overflow module (2b) which comprises a receiving space set up for receiving building material (4) not solidified in the course of additive manufacturing of a three-dimensional object (2), or
- a functional unit (12d) is formed as a handling module which comprises a receiving space arranged for receiving at least one additively manufactured object (2).

## Revendications

1. Installation (1) pour la fabrication additive d'objets tridimensionnels (2), comprenant :
- au moins une unité fonctionnelle modulaire mobile (12a - 12d), qui présente un espace de réception aménagé pour recevoir un matériau de construction (4),
- une structure de tunnel (21) qui présente au moins une section de tunnel (22) dans laquelle au moins une unité fonctionnelle modulaire (12a - 12d) est mobile,
- au moins un dispositif (3) qui est conçu pour la fabrication additive d'un objet tridimensionnel (2) par exposition sélective successive couche par couche et solidification concomitante de couches de matériau de construction formées au moyen d'un faisceau d'énergie (5), le dispositif (3) présentant une section de liaison (26), par laquelle le dispositif (3) peut être relié ou est relié à la structure de tunnel (21), de sorte qu'une unité fonctionnelle modulaire (12a - 12d) peut être déplacée à partir du dispositif (3) dans la structure de tunnel (21) ou à partir de la structure de tunnel (21) dans le dispositif (3),
- un dispositif de remplissage et de vidage (13), qui est conçu pour remplir de matériau de construction (4) un espace de réception d'une unité fonctionnelle (12a - 12d) déplacée dans une zone de remplissage (14) du dispositif de remplissage et de vidage (13) et pour vider le matériau de construction (4) se trouvant dans un espace de réception d'une unité fonctionnelle (12a - 12d) déplacée dans une zone de vidage (15) du dispositif de remplissage et de vidage (13), le dispositif de remplissage et de vidage (13) présentant une section de liaison (26) par laquelle le dispositif de remplissage et de vidage (13) peut être relié ou est relié à la structure de tunnel (21), de sorte qu'une unité fonctionnelle modulaire (12a - 12d) peut être déplacée à partir du dispositif de remplissage et de vidage (13) dans la structure de tunnel (21) ou à partir de la structure de tunnel (21) dans le dispositif de remplissage et de vidage (13) ou
- un dispositif de remplissage (13), qui est conçu pour remplir de matériau de construction (4) un espace de réception d'une unité fonctionnelle (12a - 12d) déplacée dans une zone de remplissage (14) du dispositif de remplissage (13), le dispositif de remplissage (13) présentant une section de liaison (26), par laquelle le dispositif de remplissage (13) peut être relié ou est relié à la structure de tunnel (21), de sorte qu'une unité fonctionnelle modulaire (12a - 12d) peut être déplacée à partir du dispositif de remplissage (13) dans la structure de tunnel (21) ou à partir de la structure de tunnel (21) dans le dispositif de remplissage (13).

2. Installation selon la revendication 1, **caractérisée en ce que** le dispositif de remplissage et/ou de vidange (13) est disposé ou formé dans une structure de boîtier (20) inertisable.

3. Installation selon la revendication 1 ou 2, **caractérisée par** un dispositif de détection (29) associé au dispositif de remplissage et/ou de vidange (13), qui
- pour détecter une unité fonctionnelle (12a - 12d) déplacée dans une zone de remplissage (14) et/ou dans une zone de vidage (15) du dispositif de remplissage et/ou de vidage (13) et/ou
- pour la détection d'au moins un paramètre d'état, en particulier de la capacité de fonctionnement, d'au moins un élément fonctionnel d'une unité fonctionnelle (12a - 12d) déplacée dans la zone de remplissage (14) et/ou la zone de vidage (15) et/ou
- pour la détection d'au moins un paramètre d'état, en particulier physique, à l'intérieur d'un espace de réception, en particulier rempli au moins par sections de matériau de construction (4), d'une unité fonctionnelle (12a - 12d) déplacée dans la zone de remplissage (14) et/ou la zone de vidage (15) et/ou
- pour la détection d'un niveau de remplissage d'un matériau de construction (4), qui est logé dans un espace de réception d'une unité fonctionnelle (12a - 12d) déplacée dans la zone de remplissage (14) et/ou la zone de vidage (15), et/ou
- est conçu pour détecter au moins un paramètre d'état d'un matériau de construction (4) qui est logé dans un espace de réception d'une unité fonctionnelle (12a - 12d) déplacée dans la zone de remplissage (14) et/ou la zone de vidage (15).

4. Installation selon l'une des revendications précédentes, **caractérisée par** un dispositif d'équilibrage de température (31) associé au dispositif de remplissage et/ou de vidage (13), qui sert à équilibrer la température d'au moins un élément rempli, en particulier au moins partiellement, de matériau de construction (4), espace de réception d'une unité fonctionnelle (12a - 12d) déplacée dans la zone de remplissage (14) et/ou la zone de vidage (15) et/ou pour tempérer un matériau de construction (4), qui est reçu dans un espace de réception d'une unité fonctionnelle (12a - 12d) déplacée dans la zone de remplissage (14) et/ou la zone de vidage (15).

5. Installation selon l'une des revendications précédentes, **caractérisée par** un dispositif d'inertisation (32) associé au dispositif de remplissage et/ou de vidage (13), qui est conçu pour inerter au moins un espace de réception, en particulier rempli au moins par sections de matériau de construction (4), d'une unité fonctionnelle (12a - 12d) déplacée dans la zone de remplissage (14) et/ou la zone de vidage (15).

6. Installation selon l'une des revendications précédentes, **caractérisée par** un dispositif de criblage (36) associé au dispositif de remplissage et/ou de vidage (13), qui est aménagé pour le criblage de matériaux de construction (4) à introduire dans un espace de réception d'une unité fonctionnelle (12a - 12d) déplacée dans la zone de remplissage (14) et/ou la zone de vidage (15) et/ou pour le criblage de matériaux de construction (4) vidés d'un espace de réception d'une unité fonctionnelle (12a - 12d) déplacée dans la zone de remplissage (14) et/ou la zone de vidage (15).

7. Installation selon l'une des revendications précédentes, **caractérisée par** un dispositif de sécurité (33) associé au dispositif de remplissage et/ou de vidage (13), qui est aménagé pour sécuriser en position fixe une unité fonctionnelle (12a - 12d) déplacée dans la zone de remplissage (14) et/ou la zone de vidage (15), le dispositif de sécurité (33) comprenant au moins un élément de sécurité (34), notamment à action mécanique et/ou magnétique.

8. Installation selon l'une des revendications 3 à 7, **caractérisée par** un dispositif de commande (35) associé au dispositif de remplissage et/ou de vidange (13) pour commander le fonctionnement du dispositif de remplissage et/ou de vidange (13) et/ou du dispositif de régulation de température (31) et/ou du dispositif d'inertage (32) et/ou du dispositif de tamisage (36) et/ou du dispositif de sécurité (33) en fonction d'au moins un résultat de détection du dispositif de détection (29).

9. Installation selon l'une des revendications précédentes, **caractérisée par** un dispositif de transport (24), le dispositif de transport (24) comprenant au moins un moyen de transport (25) disposé ou configuré du côté de la structure du tunnel, qui est configuré pour mettre en mouvement une unité fonctionnelle (12a - 12d), et/ou au moins un moyen de transport (25) disposé ou configuré du côté de l'unité fonctionnelle, qui est configuré pour mettre en mouvement l'unité fonctionnelle (12a - 12d).

10. Installation selon l'une des revendications précédentes, **caractérisée en ce que**
- une unité fonctionnelle (12a) est conçue comme un module de construction, qui comprend un espace de réception aménagé pour recevoir une plaque de construction (27) montée de manière mobile, en particulier réglable en hauteur, par rapport à un corps de base du module de construction (2a), sur laquelle un objet tridimensionnel (2) peut être fabriqué par addition, ou
- une unité fonctionnelle (12b) est conçue comme un module de dosage qui comprend un espace de réception (5) aménagé pour recevoir un matériau de construction (4) à consolider dans le cadre d'une fabrication additive d'un objet tridimensionnel (2) et un dispositif de dosage pour doser une quantité déterminée de matériau de construction (4) à consolider dans le cadre d'une fabrication additive d'un objet tridimensionnel (2) à partir de l'espace de réception, ou
- une unité fonctionnelle (2) est conçue comme un module de débordement (2b) qui comprend un espace de réception aménagé pour recevoir du matériau de construction (4) non consolidé dans le cadre d'une fabrication additive d'un objet tridimensionnel (2), ou
- une unité fonctionnelle (12d) est conçue comme un module de manipulation ou de manutention, qui comprend un espace de réception aménagé pour recevoir au moins un objet (2) fabriqué par fabrication additive.
